# EUROPEAN PATENT SPECIFICATION

(11) **EP 0 568 635 B1**
(45) Date of publication and mention of the grant of the patent: **19.03.1997**
(21) Application number: 92905285.0
(22) Date of filing: 15.01.1992
(51) Int. Cl.: A01N 57/20

(54) **IMPROVED GLYPHOSATE FORMULATIONS**
FORMULIERUNGEN VON GLYPHOSATEN
FORMULATIONS AMELIOREES A BASE DE GLYPHOSATE

(30) Priority: 24.01.1991 US 645365; 13.12.1991 US 804592
(43) Date of publication of application: 10.11.1993
(73) Proprietor: MONSANTO COMPANY, St. Louis Missouri 63167 (US)
(72) Inventor: PRILL, Erhard, John, Kirkwood, MO 63122 (US); RICHARDSON, Ronald, Owen, Ellisville, MO 63011 (US)
(74) Representative: Bosch, Henry
(86) International application number: US9200274
(87) International publication number: WO9212637

(56) References cited:
- EP-A- 0 360 441
- EP-A- 0 387 165
- WO-A-90/07275
- WORLD PATENTS INDEX LATEST Week 8736, 1 August 1987 Derwent Publications Ltd., London, GB; AN 87-253854

## Description

### Field of the Invention

This invention relates to a substantially dry effervescent agriculturally acceptable composition(s) containing N-phosphonomethylglycine, to a use of such a composition(s) in killing or controlling weeds and to a process for preparing such a composition(s).

Glyphosate (N-phosphonomethylglycine) is well known in the art as an effective herbicide. Glyphosate, an organic acid, is only slightly soluble in water. Glyphosate is typically commercially formulated and applied as a water-soluble salt, especially as the isopropylamine salt (IPA salt).

Various formulations of glyphosate, salts of glyphosate, methods for preparing salts of glyphosate, and methods of use thereof are disclosed in U.S. Patents 3,799,758 and 4,405,531 issued to John E. Franz on March 26, 1974 and September 20, 1983 respectively. Other U.S. patents which disclose salts of glyphosate include U.S. Patent 4,315,765 issued to George B. Large on February 16, 1982; U.S. Patent 4,507,250 issued to Izhak Bakel on March 26, 1985; U.S. Patent 4,397,676 issued to Izhak Bakel on August 9, 1983; U.S. Patent 4,481,026 issued to Michael P. Prisbylla on November 6, 1984; U.S. Patent 4,140,513 issued to Erhard J. Prill on February 20, 1979.

Hungarian Patent Application No. 431/88 assigned to Alkaloida Vegyeszet discloses that water soluble plant-growth controlling solid active agents, N-phosphonomethylglycine and its derivatives are mixed with carbonate and hydrogen carbonate salts and with customary plant protection additives. Sufficient initiating water is added to govern the extent of a double decomposition reaction between these compounds. The solid obtained is converted by colloid-chemical means into foams, creams, moist pastes and wet feel powders packaged as powders, granules or compressed briquettes.

European Patent Application 0 127 773 A1 assigned to Wellcome Foundation Limited, published 12/12/84 discloses a pesticidal composition comprising a pesticide, an emulsifier or dispersing agent for the pesticide, and a self-disintegrating agent capable of effervescing or swelling on being contacted with water. The composition is disclosed as being conveniently in the form of an effervescent pesticidal tablet.

UK Patent Application GB 2 095 556 A published October 6, 1982 discloses a composition for controlling the presence of unwanted microorganisms comprising a probiocide that produce the biocide formaldehyde, an effervescent couple for evolving carbon dioxide and optionally a surfactant.

UK Patent Specification 1 505 738 assigned to Kirby Pharmaceutical Limited, published March 30, 1978 discloses a process for the preparation of a water soluble chemical composition compounded in an effervescent tablet form, which comprises the direct pressing into tablet form by a direct compression process of a powder comprising a chemical compound, an alkali metal bicarbonate, an alkali metal carbonate and a solid, water soluble aliphatic carboxylic acid or an acid salt thereof.

UK Patent Specification 1 516 682, assigned to SOGEMARIC, published July 5, 1978 discloses a mixture of one or more active phytosanitary materials (herbicides, growth regulators, insecticides, fungicides) in solid form, i.e. either the active material alone if it is solid, or impregnated on a solid, inert support if it is liquid, is mixed with the additives, wetting agents, dispersants of the type commonly used in the production of wettable powders,and with the non-hydrophilic filler and the disintegrating agent described therein. The mixture is homogenized and then compressed into tablets or pellets of the required shape under a pressure in the range from 50 to 1000 kg/cm² and preferably under a pressure in the range from 100 to 600 kg/cm².

DuPont PCT/US89/0272 discloses a tablet consisting essentially of about 20 to 75% of a pesticide melting about 100°C and having a water solubility of no more than about 5% and a delivery system consisting essentially of a dibasic or tribasic organic carboxylic acid, ammonium or alkali carbonate or bicarbonate, dispersant, PVP and an anionic or nonionic wetting agent whereby the dispersion of the pesticide in water is fine enough to pass a 50 mesh screen.

Ciba Geigy AU-A-53042/90 discloses a pesticidal active ingredient concentrate in effervescent tablet form which disintegrates in water to form a sprayable suspension and consists essentially of a water insoluble active ingredient, surface-active agents, fillers and binders, flow regulators and a disintegrator, which concentrate contains the disintegrator in the form of an effervescent granulate comprising potassium carbonate and or potassium hydrogen carbonate, a solid water soluble acidic substance and a finely divided water-insoluble substance capable of binding water.

DuPont EPO published patent application 0 360 441 discloses a water soluble granule and water dispersible granule composition whereby glyphosate is disclosed as a granular substrate along with potassium carbonate.

Ciba Geigy AU-A-25886/88 discloses effervescent compressed pesticidal tablets comprising a sulfonyl urea, dispersion agent and a disintegrator further comprising a solid water soluble acidic substance, an alkali/alkaline earth metal/hydrogen carbonate, a gliding or flow regulating agent and optionally a filler or binder.

Rhône Poulenc Published UK Patent specification GB 2 104 780 A discloses an effervescent herbicidal granule which is said to be a water soluble granule of an acid herbicide or plant growth regulator, alkaline carbonate/bicarbonate, impurities from the herbicide acid additives and surfactants or lubricants.

EPO published patent application 0 204 146 discloses a herbicidal composition comprising (a) 2-(4-chloro-2-fluoro-5-propargyloxyphenyl)-5,6,7,8-tetra-hydro-1H-1,2,4-triazolo (1,2-s)pyridazine-1,3,-2H-dione (I), with (b) glyphosate (i) glufosinate (ii) bialaphos (iii) and/or paraquat (1,1'-dimethyl-4,4'-bipyridinium ion) (iv) or their salts and an inert carrier or diluent.

EPO published patent application 0 255 760 discloses a granule shaped agricultural composition prepared by introducing to the top of a drying tower, a mixture of the agricultural chemical, an anionic surfactant and optionally one or more additives in the form of a concentrated solution or an aqueous slurry.

Published Japanese patent applications J62175407 and J62175408 disclose a herbicide containing a solid carrier, additives, and a herbicidal component and having a particle size of 48-150 mesh. The disclosed herbicidal components are (3-amino-3-carboxy)propyl-1)methyl-phosphonic acid, N-(phosphonomethylglycine, (2-amino-4-methylphosphino-butyral) alanylalanine and their salts.

Published European Patent Application 0 206 537 discloses a solid, substantially non-hygroscopic, phytoactive composition comprising an intimate mixture of a phytoactive N-phosphonomethyl-N-carboxymethyl compound and a surfactant which is solid at ambient temperatures.

Published European Patent Application 0 256 608 discloses a method for the preparation of a solid, phytoactive composition comprising (a) reacting an acid form of a phytoactive N-phosphonomethyl-N-carboxymethyl compound with a liquid amine to form the amine salt of said N-phosphonomethyl-N-carboxymethyl compound (b) admixing said amine salt of said N-phosphonomethyl-N-carboxymethyl compound with a molten surfactant, the surfactant being solid at ambient temperature and (c) cooling said mixture to a temperature below the melting point of the surfactant to form a composition comprising said surfactant and said amine salt of N-phosphonomethyl-N-carboxylmethyl compound interdispersed in the matrix thereof and which is solid at ambient temperatures.

Publication No. WO 87/04595 discloses a herbicidal water-soluble dry-particulate glyphosate formulation comprising the sodium salt of glyphosate and a surface active agent having the following formula: 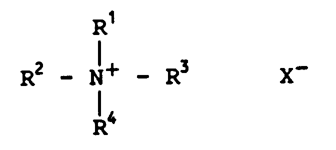 wherein R¹ and R² are independently methyl or ethyl, R³ is methyl, ethyl, benzyl or C₁_{*0*} to C₁₈ alkyl, R₄ is C₁₀ to C₁₈ alkyl and X is chloro or bromo.

Japanese LOP 145,205-88 discloses an aqueous concentrate herbicidal formulation comprising a water soluble glyphosate salt, ammonium sulfate and a quaternary ammonium salt.

PCT/WO8704712 discloses a method of preparing a particulate alkali metal salt of N-phosphonomethylglycine, which comprises adding a solid alkali metal base with agitation to N-phosphonomethylglycine containing up to 25% water.

Research Disclosure dated November 1986 discloses in publication 27161 a wettable powder formulation effective in control of weeds comprising N-phosphonomethylglycine, a non-ionic surfactant, diatomaceous earth, an inorganic salt (ammonium sulphate) and an antifoaming agent.

Chemical Abstracts 103: 191395k (1985) Glyphosate preparations. Davydov, A.M.; Vechtomova, T.N.; Bazunova, G. G. (USSR). Zashch. Rast. (Moscow) 1985, (9), 40-l(Russ) discloses the 36% ag. soln. Utal (I) [96638-41-4] and the 50% wettable powder Fosulen (II) which are Soviet brands of glyphosate.

### SUMMARY OF THE INVENTION

The invention comprises a substantially dry, effervescent, water soluble, agriculturally acceptable composition comprising substantially nonreacted N-phosphonomethylglycine, and a carbonate based acid acceptor in such an extend as to neutralize N-phosphonomethylglycine when the composition is poured into water, and optionally a solid and/or liquid surfactant, the optional liquid surfactant if present preferably in the range from about 0.2 to about 15.0% by weight surfactant and more preferably in the range of 0.2 to 10.0% by weight surfactant although greater amounts of optional liquid surfactant may be employed depending on other formulation ingredients.

The term agriculturally acceptable includes use of compositions of this invention in the homeowner, and apartment areas as well as industrial, residential and other similar areas where use may be convenient.

Compositions of this invention optionally further comprise ammonium sulfate, alkali metal sulfates such as potassium sulfate, sodium sulfate, alkali metal chlorides such as potassium chloride, urea, mixtures thereof and the like. The composition may optionally include a synergist, a quick-burn additive, a humectant, a co-herbicide, a dye, a pigment, a corrosion inhibitor, a thickener, a dispersing agent, a calcium sequestrant, mixtures thereof and the like.

In a process for preparing the composition of this invention, the substantially dry, water soluble, effervescent, agriculturally acceptable composition is prepared by admixing substantially unreacted N-phosphonomethylglycine and a carbonate based acid acceptor, and optionally a solid or liquid surfactant, optionally with pulverized ammonium sulfate and thereafter blending, tabletting, compacting, briquetting, or granulating, such as by wet extrusion, these illustrative ingredients and optional ingredients to form a composition(s) of this invention.

### Objects of the Invention

It is an object of this invention to provide a dry, effervescent, water soluble, agriculturally acceptable glyphosate composition for use including the homeowner and residential market.

It is an object of this invention to provide a process for preparing a dry, effervescent, water soluble powder or granular agriculturally acceptable composition optionally containing a surfactant.

It is yet another object of this invention to provide a herbicidal method of use for killing and controlling weeds using a substantially dry, effervescent, water soluble, agriculturally acceptable composition.

It is a further object of this invention to provide the substantially dry, effervescent, water soluble, agriculturally acceptable formulation which can be transported at a lower cost, which has increased content of herbicidally active ingredients (N-phosphonomethylglycine, acid acceptor, optional surfactant), which can be mixed with various co-herbicides in compatible fashion to form a storage stable composition and which can be packaged, (combustible or recyclable or disposable) containers if desired and which is easy to use.

These and other objects are achieved in this invention which is hereinafter described in more detail.

### Detailed Description of the Invention

The invention comprises a substantially dry, effervescent, water soluble, (preferably powder or granular) agriculturally acceptable composition comprising N-phosphonomethylglycine, and a carbonate based acid acceptor in such an extend as to neutralize N-phosphonomethylglycine when the composition is poured into water, and optionally a solid or liquid surfactant.

If prepared as a substantially dry material as for example a powder, illustratively the powder is typically less than about minus 50 mesh and contains in the range from about 0.01% weight to about 10.0% weight and preferably less than about 2% weight percent water but more than about 0.2%, although greater or lesser amounts of moisture may be present depending on the formulation ingredients selected.

If desired, a defoamer, a corrosion inhibitor, a thickener, a dispersing agent, a calcium sequestrant, a synergist, a quick burn down additive, a humectant, a co-herbicide, a dye or a pigment may be admixed individually or collectively in the composition.

Certain co-herbicides which form water soluble salts may be used if desired. Such co-herbicides may be selected from the group consisting of 2,4-D (2,4-dichlorophenoxyacetic acid), dicamba (3,6-dichloro-o-anisic acid), picloram (4-amino-3,5,6-trichloropyridine-2-carboxylic acid), MCPA (4-chloro-o-tolyloxyacetic acid), dalapon (2,2-dichloropropionic acid), dichlorprop 2-(2,4-dichlorophenoxy)propionic acid), MCPB (4-[(4-chloro-o-tolyl)oxy]butyric acid), acifluorfen (5-[2-chloro-4-(trifluoromethyl)phenoxy]-2-nitrobenzoate), chloramben (3-amino-2,5-dichlorobenzoic acid), endothall (7-oxabicyclo(2.2.1)-heptane-2,3-dicarboxylic acid), mecoprop ([2-(2-methyl-4-chlorophenoxy)propionic acid], 2,4,5-T (2,4,5-trichloroacetic acid), 2,3,6-TBA (2,3,6- trichlorobenzoic acid), glufosinate-ammonium (3-amino-3-carboxypropyl)-methylphosphinate, imazapyr (2-[4,5-dihydro-4-methyl-4-(1-methylethyl)- 5-oxo-1H-imidazol-2-yl]-5-ethyl-3-pyridinecarboxylic acid), imazaquin, (2-[4,5-dihydro-4-methyl-4-(1-methylethyl)-5-oxo-1H-imidazol-2-yl]-3-quinolinecarboxylic acid), bialaphos (DL-homoalanin-4-yl-methyl-phosphinate), mixtures thereof and the like.

If further desired, the co-herbicide salt may be blended in the composition instead of the acid form being included in glyphosate and acid acceptor, (optional surfactant) composition.

Suitable acid acceptors may be illustratively selected from the group consisting of ammonium and alkali metal carbonates, bicarbonates.

A liquid surfactant can be used if present in small enough quantity or if a large quantity of an additive such as ammonium sulfate is present or if adsorbed on a high surface area carrier.

The pKa's for glyphosate are 2.27, 5.58 and 10,25. In order for a basic salt to be useful for solubilizing glyphosate, it must be a salt of an acid with a pKa somewhat greater than 2.27. Also the acid should be water soluble. The pKa values for carbonic acid and the equivalents of base available from their salts (i.e. sodium, potassium, ammonium, etc.) for solubilizing glyphosate are 6.36 and 10.25, two equivalents of base available.

Suitable surfactants (optional) include nonionic surfactants, anionic surfactants, cationic surfactants and amphoteric surfactants, and mixtures thereof preferably ones that provide increased herbicidal activity of N-phosphonomethylglycine or its salts.

Examples of optional nonionic surfactants are polyoxyethylene polyoxypropylene block copolymers, polyoxyethylene alkyl phenols, polyoxyethylene oleyl ethers, alkylglycosides, or mixtures thereof.

Examples of optional anionic surfactants are sodium lauryl sulfate, sodium mono- and di- alkyl naphthalene sulfonates, sodium alpha-olefin sulfonates, sodium alkylbenzene sulfonates, sodium alkane sulfonates, or mixtures thereof, including sodium, potassium and amine salts.

Examples of optional cationic surfactants are ethoxylated fatty amines and their corresponding quaternary salts such as ethoxylated tallowamines, ethoxylated oleylamines, ethoxylated cocoamines and ethoxylated soyamines, or mixtures thereof.

Examples of other optional cationic surfactants include propoxylated quaternary ammonium surfactants. Such surfactants can have the formula: 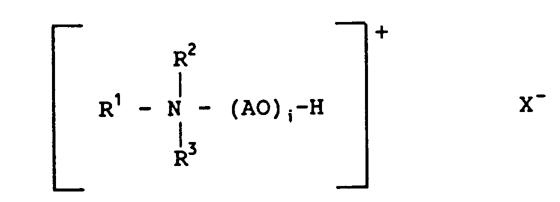 wherein A or each A represents an alkylene group having 2 or 3 carbon atoms, R¹ and R² are each independently an alkyl group having from 1 to 5 carbon atoms; R³ is an alkyl group having from 1 to 5 carbon atoms or a group having the formula (AO)ⱼ-H; i (in a compound in which R³ is an alkyl group) or i + j (in a compound in which R³ is a group having the formula (AO)ⱼ-H) has a value of from 2 to 20; and X⁻ is a suitable anion.

A preferred composition of the invention comprises glyphosate acid, acid acceptor and a quaternary ammonium compound the latter having a structure represented by the formula: 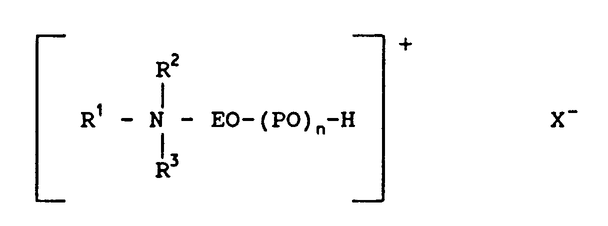 wherein -EO- is an ethylene oxide radical and -PO- is a propylene oxide radical, R¹ and R² are each independently an alkyl group having from 1 to 3 carbon atoms; R³ is an alkyl group having from 1 to 3 carbon atoms, a group having the formula (EO)ₘ-H or a group having the formula EO-(PO)ₘ-H; n (in a compound in which R³ is an alkyl group) or n + m (in a compound in which R³ is a group having the formula EO-(PO)ₘ-H), has a value of from 2 to 20; and X⁻ is a suitable anion and n and m are each independently varying integers.

Examples of optional suitable amphoteric surfactants are Monaterics, Miranols, betaines, Lonzaines, and mixtures thereof.

In another embodiment the composition of this invention may further comprise ammonium sulfate, potassium sulfate, potassium chloride, sodium sulfate, urea, mixtures thereof and the like. If desired, the composition may include a defoamer.

If desired, the composition may further include a synergist, a quick-burn additive, a humectant, a co-herbicide, a dye, a pigment, a dispersing agent, a corrosion inhibitor, a thickener, a calcium sequestrant, a bittering agent, mixtures thereof and the like. The thickener is typically selected from the group consisting of sodium ligninsulfate, starches, cellulose derivatives, high molecular weight polyoxyethylenes, gums, mixtures thereof and the like.

If desired, a dry, water soluble, agriculturally acceptable composition of this invention may be prepared in a process which comprises admixing pulverized ingredients, N-phosphonomethylglycine, carbonate based acid acceptor, and optional solid or liquid surfactant, optionally with pulverized ammonium sulfate and thereafter blending these ingredients to form said composition. Optionally, the blended ingredients may be pulverized. After the blending operation, wet extrusion may be carried out, followed by an optional drying step.

This invention also includes a method of killing or controlling weeds by applying a herbicidally effective amount of composition of this invention to the locus of the plant or weed to be killed or controlled as prepared if dew is present and the form of a composition of this invention is suitable for example a wettable powder, or preferably by adding diluent water and spraying the diluted composition on the weed.

The preferred shape of a composition of this invention is that of a tablet wherein the tablet is about 2 inches (5.1 cm) long by about 1/2 inch (1.3 cm) wide by about 1/2 inch (1.3 cm) thick although greater or lesser individual measurements and sizes may be employed if desired. The preferred weight is in the range from about 1 to about 36 grams.

Typically a pump-up type or hand trigger sprayer will be used for applying a diluted composition of this invention to weeds or plants. The sprayer will preferably be filled with about 12 ounces (340 grams) clear water and a tablet comprising a composition of this invention is added. The tablet is left to dissolve (about 1 to about 3 minutes) and then additional water (about 12 ounces) (340 grams) is added.

The following examples are presented to illustrate the present invention as well as some of the various embodiments of the inventions.

### EXAMPLES

### EXAMPLE 1

Examples of Water Soluble Powder (WSP) formulations with illustrative acid acceptors and using an optional surfactant were prepared by blending the ingredients which had been previously ground to minus 50 mesh. An N-phosphonomethylglycine/optional surfactant weight ratio of 2:1 was used. A higher or lower ratio could be used. Five percent excess acid acceptor over theory was usually employed. The compositions are shown in this Example.

### EXAMPLE 1

| ACID ACCEPTOR, WEIGHT % | GLYPHOSATE* Weight % | SURFACTANT** Weight % | SWS-131 Defoamer, Weight % |
|---|---|---|---|
| Sodium carbonate, 17.25 | 52.65 | Witconate AOS 29.10 | 1.00 |
| Sodium carbonate, 17.80 | 54.24 | Witconate AOS 21.10 | 0.95 |

| | | | |
|---|---|---|---|
| * 99.6% glyphosate used. | | | |
| ** Witconate AOS, a liquid concentrate, was dried and powdered. The percentages given are for the dried material. Witconate AOK is a dry product. The composition of this surfactant can be found in Table II. | | | |

### Example 2

Water soluble powders (WSP) formulations were prepared for use in bioassay tests to determine the relative contributions of the various acid acceptors to the glyphosate herbicidal activity. The compositions of the WSP formulations are shown in this Example.

### EXAMPLE 2

| INGREDIENTS | FORMULATION COMPOSITIONS |
|---|---|
| | C |
| Glyphosate (99.5%) | 52.65 |
| Witconate AOK (90%)* | 29.10 |
| SWS Q-131** | 1.00 |
| Sodium carbonate | 17.25 |
| Glyphosate assay | 52.39 |

| | |
|---|---|
| * Powder form of Witconate AOS | |
| ** Silicon defoamer on an inert carrier | |

### EXAMPLE 3

The results of the bioassay test of the Example 2 formulation are shown below. Roundup herbicide was used as a comparative of the prior art.

In all of the greenhouse bioassay tests provided in this specification, pot-grown weed species were sprayed with aqueous solutions of the glyphosate WSP formulations using a track sprayer calibrated to apply about 20 gallons/acre (187 liters/hectare) at about 30 psi (21 kilo Pascals).

### BIOLOGICAL EVALUATION OF THE WATER-SOLUBLE POWDER HERBICIDE FORMULATION

| FORMULATION | TREATMENT | % INHIBITION* |
|---|---|---|
| COMPARATIVE | Roundup Herbicide | 52.9 |
| P | Untreated Check | 0 |

| | | |
|---|---|---|
| * The mean of four rates (1/8, 1/4, 1/2 and 1 pounds glyphosate/acre) (0.14, 0.28, 0.56 and 1.12 kg/ha) on Johnsongrass as the weed species, four weeks after treatment. | | |

### EXAMPLE 4

WSP formulations were prepared without Witconate surfactant. The surfactant was tank mixed into the spray solutions for bioassays. Example 5 hereinafter shows the results when surfactant, an ethoxylated tallow amine was used

### EXAMPLE 4

### WSP FORMULATION WITHOUT SURFACTANT

| INGREDIENTS | FORMULATION COMPOSITION |
|---|---|
| | C |
| Glyphosate (99.5%) | 74.57 |
| SWS Q-131 | 1.00 |
| C. Sodium carbonate | 24.43 |
| Glyphosate (100%) | 74.53 |

### EXAMPLE 5

### EVALUATION OF THE WSP FORMULATION USING AN ETHOXYLATED AMINE SURFACTANT HAVING A DEGREE OF ETHOXYLATION IN THE RANGE FROM ABOUT 15 TO ABOUT 18

| TREATMENT ** | % INHIBITION* |
|---|---|
| Isopropylamine salt of glyphosate | 55.2 |
| Sodium carbonate | 36.7 |
| Untreated Check | 0 |

| | |
|---|---|
| * On Johnsongrass, mean of four rates (1/4, 1/2, 3/4 and 1 pound glyphosate/acre) (0.28, 0.56, 0.84 and 1.12 kg/ha), 4 weeks after treatment. | |
| ** 0.25 % an ethoxylated amine surfactant present in all spray solutions. | |

Comparing the bioassay results with the ethoxylated amine surfactant (Example 5) with those of Example 3, shows that the inhibitions are highly surfactant dependent.

Acid herbicides such as picloram (4-amino-3,5,6-trichloropyridine-2-carboxylic acid), dicamba (3,6-dichloro-o-anisic acid), 2,4-D (2,4-dichloro phenoxy)acetic acid), Bialaphos, MCPA (4-chloro-o-tolyloxyacetic acid) are especially suitable for WSP package mixes with glyphosate since they can also be solubilized by the acid acceptor as is glyphosate. Optionally, a water soluble salt of the acid actives could be blended with the glyphosate WSP formulation.

Among such WSP package mixes are the straight package mixes and ones with dicamba (3,6-dichloro-o-anisic acid), 2,4-D (2,4-dichlorophenoxy)acetic acid) and picloram (4-amino-3,5,6-trichloropyridine-2-carboxylic acid) also containing ammonium sulfate, which are common tank mix combinations. A defoamer and an anti-drift agent may also be included. The ratios of ingredients can be varied greatly as long as sufficient acid acceptor is present.

### EXAMPLE 6

An important advantage of glyphosate WSP formulations over the commercially available aqueous Roundup formulation is the ability to incorporate solid additives including illustrative types which have been enumerated previously. Water-insoluble liquid additives, in small quantity or absorbed on a carrier can also be used. Example 6 also shows ammonium sulfate as an example of additives combined with WSP containing various acid acceptors.

### EXAMPLE 6

### GLYPHOSATE WSP CONTAINING ADDITIVES

| ADDITIVE, % | ACID ACCEPTOR, % | % GLYPHOSATE(99.6%) | SURFACTANT, % |
|---|---|---|---|
| ammonium sulfate, 77.75 | sodium carbonate, 3.86 | 11.90 | Witconate AOS***, 6.49 |
| ammonium sulfate, 76.03 | sodium bicarbonate, 5.98 | 11.63 | Witconate AOS***, 6.35 |

| | | | |
|---|---|---|---|
| * H₂S odor present indicating decomposition of the thiosulfuric acid formed. | | | |
| *** Dried to give 90% powder. | | | |

**TABLE II**

| COMPOSITION OF SURFACTANTS | |
|---|---|
| Morwet B (75%) | sodium n-butylnaphthalene sulfonate |
| Morwet DB (75%) | sodium dibutylnaphthalene sulfonate |
| Morwet EFW (94%) | blend of alkylnaphthalene sulfonate and a sulfonated carboxylate |
| Morwet IP (75%) | sodium diisopropylnaphthalene sulfonate |
| Morwet M (96%) | sodium mono and dimethylnaphthalene sulfonate |
| Sellogen HR (75%) | sodium diisopropylnaphthalene sulfonate |
| Witconate KAS-10 (90%) - Witco EXP 5093-15C, Potassium decyl sulfonate Sodium dodecyl sulfonate (90%) - prepared from the corresponding IPA salt (Witco EXP 4896-9) Potassium tetradecyl sulfonate(90%)-prepared from the corresponding IPA salt(Witco EXP 4896-10) Sodium tetradecyl sulfonate(90%) - prepared from the corresponding IPA salt (Witco EXP 4896-10) Witconate NAS-1416 (90%) - Witco EXP 5093-15D, (mixture of sodium tetradecyl and hexadecyl sulfonate) Witconate KOAS-10 (90%) - Witco EXP 5093-15A, potassium decyl alpha-olefin sulfonate Witconate AOS-12 (90%) - Witco EXP 5042-87B, sodium dodecyl alpha-olefin sulfonate Witconate KOAS 14-16 (90%) - Witco EXP 5093-15B, potassium tetradecyl and hexadecyl-alpha-olefin sulfonate Witconate AOK (90%) - sodium tetradecyl and hexadecyl alpha-olefin sulfonate (dry form of Witconate AOS) Aerosol OTB (100%) - Na dioctylsulfosuccinate/benzoic acid complex Igepon T-77 (67%) - Sodium N-methyl-N-oleyl taurate | |

### EXAMPLE 7

A premix powder formulation was prepared according to the following formulation:

| Ingredients: | Weight (Grams) | Percent by Weight |
|---|---|---|
| Glyphosate acid (dried) 96.7% ae. | 6205.0 | 62.05 |
| Sodium bicarbonate | 3345.0 | 33.45 |
| Sodium Sulfite | 40.0 | 0.40 |
| Sag 47 Defoamer | 10 | 0.10 |
| PEG 3350 | 400.0 | 4.00 |
| Carbowax 3350 | | |
| Total | 10000.0 | 100.00% |

Glyphosate acid was substantially unreacted. This means that glyphosate is applied to plants as glyphosate acid if no water is added to the formulation of this invention. If water is added, it is believed that glyphosate reacts with the acid acceptor and some glyphosate salt is formed.

This premix powder was processed into water soluble granules (WSG) by first compacting the pre-mix powder into wafer shape using a roller compactor called a Chilsonator. This roller compactor employed pressures of about 4000 pounds per square inch (27.6 x 10³ kilo Pascals). The wafers from this Chilsonator were then ground to about 12 mesh or less using a Straub 4E grinder (similar to a grist mill, although a Fitz mill is preferred). The powder from the Straub grinding process was screened off and recycled again through the Chilsonator. The process of using the Chilsonator and the Straub grinder was repeated until a desired amount of granules were made.

The powder prepared in the immediately described process above was fed into a hopper and then using a volumetric feed system was fed into a dye/punch/mold arrangement for formation into tablets. Pressure was applied to the punch and dye and tablets were formed. The pressure was removed and the tablets were ejected. The tablets weighed about 4.5 grams plus or minus 0.2 gram. The tablets were about 0.75 inch (1.91 cm) in diameter and about 0.5 inch (1.27 cm) in height. Tablets of different weights and configurations can also be made using this process.

### EXAMPLE 8

Glyphosate acid technical (43% w/w), a propoxylated quaternary ammonium surfactant (15% w/w) known as Dodigen 4022 and ammonium sulfate 97% (30% w/w) are mixed in a planetary mixing equipment until a homogeneous dough is obtained. Sodium carbonate (12% w/w) is then added to the dough which is quickly homogenized and immediately pelleted by an extruder before being dried in a fluid bed dryer. The final composition of the extruded granules obtained after the extrusion step contains 1% w/w of water.

The extruded granules are poured into the spray tank filled with water. The neutralization of glyphosate by sodium carbonate, then occurs and the effervescence due to the release of CO₂ in the solution makes the extruded granules dissolve in less than 1 minute with no external agitation. As a matter of comparison, similar granules with no effervescence do not really dissolve with no external mixing and under agitation take between 2 to 4 minutes to dissolve the actual time taken depending on the turbulence in the spray tank.

An important advantage of these glyphosate WSP formulations is their ability to include solid additives. One of the most important solid additives is ammonium sulfate which can be included in the WSP at any desired level. Ammonium sulfate contributes increased biological activity. Ammonium sulfate is only compatible to a low degree in an aqueous glyphosate/surfactant formulation. Ammonium sulfate is also an effective solid additive in glyphosate WSP package mixes with co-herbicides which form water soluble salts.

Particle size of the WSP or WSG products of this invention can be varied as long as the product is completely dissolved prior to application by spraying. The preferred mode of manufacture of the glyphosate WSPs involves grinding the individual ingredients using conventional equipment and blending using such equipment as a ribbon-or V-blender or grinding the blended ingredients. Since many of the surfactants and some of the acid acceptors are very hygroscopic, all operations are preferably carried out in closed equipment and moisture-proof packaging is required such as polyethylene or polyethylene laminated paper bags or the like. A particularly preferred type of packaging is a water soluble bag within an outer moisture proof container or bag.

If desired, the powdered products of this invention may be compacted by various means as further exemplified in Example 7 and then ground and sieved to give a granular product. According to the invention, there is incorporated a gas-forming ingredient to give more rapid disintegration and solution of the granular product.

If desired, alternate carbonates may be employed such as potassium bicarbonate, sodium or potassium carbonate, mixtures thereof and the like or alkaline earth metal carbonates or bicarbonates, or mixtures thereof. such as potassium sulfite or an alkaline earth metal

Alternate lubricants may be employed including PEG'S of varying molecular weight, methyl stearate or magnesium stearate, or mixtures. Alternate defoamers may be employed such as AntiFoam® 30 IND.

A binder can be employed, such as PVP, if desired although such use is optional.

The use of a small percentage of a carbonate-based acid acceptor (a carbonate such as sodium bicarbonate/sodium carbonate, ammonium bicarbonate, or mixtures thereof in the WSG formulation which in the presence of water will give off carbon dioxide which will increase the rate of solution by rupturing granules.

The WSP or WSG compositions of this invention may vary widely with regard to the ratios of ingredients. If a surfactant is employed a glyphosate/surfactant ratio of about 4:1 to about 1:2 is a preferred range; however, other ratios, including a 1:0 may be used. The latter formulation may find utility where the presence of a surfactant is unnecessary or undesirable. The ratio of glyphosate to acid acceptor depends on the useable equivalent weight of the acceptor as shown in Table I. One useable equivalent of acid acceptor to one mole of glyphosate is required to provide for solution of the glyphosate. Usually, a 2-5% excess of acid acceptor is employed since acidic by-products in commercial glyphosate necessitate a slight excess. Depending on the use of the WSP or WSG, that is, the volume of water used in the spray, less than the theoretical quantity of useable equivalent of acid acceptor may be sufficient since glyphosate is soluble in water to the extent of about 1.0 wt. % at 25°C. WSP and WSG formulations generally are not detrimentally affected by pressure and/or temperature variations. As mentioned previously, moisture is a major concern in processing and storage of dry glyphosate formulations because of the hygroscopic nature of some of the ingredients, especially the surfactant.

In practicing the present method of-use of a dry glyphosate-containing formulation to kill or control weeds the best mode involves addition to water of a herbicidally effective amount of the composition of this invention followed by application via spraying or one of the many known wiping techniques to the locus of the plants to be killed or controlled. Addition of water may not be required (but is recommended) when application is made to plants having excessive dew. Application of a composition of this invention is made so that the plant is contacted with a herbicidally effective amount of N-phosphonomethylglycine.

Many solid surfactants can be used in glyphosate WSPs or WSG's, however, sodium tetradecyl/hexadecyl alpha-olefin sulfonate (Witconate AOK) is preferred. In formulations with low surfactant content, say about 2-5%, a liquid ethoxylated tallow amine surfactant is preferred due to its high potentiating effect on glyphosate activity. With the propoxylated quaternary ammonium surfactants, one may use up to 15% by weight.

In summary, the advantages of the dry glyphosate based formulations over the current aqueous formulations include higher active (glyphosate) content, compatibility with solid or liquid additives, use of lower cost packaging and eliminating the necessity of manufacturing a glyphosate salt prior to formulation of the final commercial product.

## Claims

1. A substantially dry, effervescent water soluble, agriculturally acceptable composition comprising a herbicidally effective amount of substantially non reacted N-phosphonomethylglycine, and a carbonate based acid acceptor in such an extend as to neutralize N-phosphonomethylglycine when the composition is poured into water.

2. The composition of Claim 1, which further comprises a solid or liquid surfactant in an amount of 0.2 to 15.0% by weight.

3. The composition of Claim 2 wherein said dry composition is a water soluble powder, a water soluble granule, a water soluble tablet or a water soluble briquette.

4. The composition of Claim 1 wherein the amount of water in said dry composition is in the range from 0.01 to 10.0 percent by weight of the total composition.

5. The composition of Claim 4 wherein said amount of water in said dry composition is in the range from 0.2 to 2.0 percent by weight of the total composition and said composition is in a granular form.

6. The composition of Claim 1 wherein said acid acceptor is selected from the group consisting of ammonium and alkali metal and alkali earth metal carbonates, bicarbonates, more preferably, sodium carbonate, potassium carbonate, sodium bicarbonate, potassium bicarbonate, and mixtures thereof.

7. The composition of Claim 1 which further comprises a co-herbicide which forms a water-soluble salt.

8. The composition of Claim 1 or Claim 7 which further comprises a dispersing agent or a corrosion inhibitor.

9. The composition of Claim 1 or Claim 7 which further comprises a thickener.

10. The composition of Claim 1 or Claim 7 which further comprises a calcium sequestrant and/or a defoamer.

11. The composition of Claim 1 or Claim 7 which further comprises an agriculturally acceptable ammonium salt or other synergist.

12. The composition of Claim 1 or Claim 7 which further comprises a quick-burn additive.

13. The composition of Claim 1 or Claim 7 which further comprises a humectant-

14. The composition of Claim 1 or Claim 7 which further comprises a dye or pigment.

15. The composition of Claim 2 wherein said surfactant is a nonionic surfactant selected from polyoxyethylene polyoxypropylene block copolymers, alkyl phenol polyoxyethylene ethers, polyoxyethylene oleylethers, or mixtures thereof, or an anionic surfactant selected from sodium laurylsulfate, sodium alpha-olefin sulfonates, potassium alpha-olefin sulfonates, sodium alkane sulfonates, potassium alkane sulfonates, ammonium alkane sulfonates, isopropylammonium alkane sulfonates, sodium alkyl, or dialkyl naphthalene sulfonates or mixtures thereof, or a cationic surfactant selected from ethoxylated fatty amines, amine oxides, such as lauryl dimethylamine oxide, N,N-bishydroxyethylcocoamine oxide, propoxylated quaternary ammonium compounds, or mixtures thereof.

16. A process for preparing a dry, water soluble agriculturally acceptable composition which comprises admixing ingredients N-phosphonomethylglycine, carbonate based acid acceptor, optionally a solid or liquid surfactant, and thereafter blending said admixed ingredients to form said composition or compacting or tabletting said composition to form a granule.

17. A method of killing or controlling weeds using the composition of Claims 1-14 by applying a herbicidally effective amount of glyphosate to the locus of the plant or weed to be killed or controlled.

18. A method of activating the herbicidal effectiveness of glyphosate acid by contacting a dry shaped object consisting essentially of glyphosate the acid, optionally a surfactant and a carbonate based acid acceptor, with water to rapidly and effervescently convert the glyphosate acid into water soluble ionic form by the formation of carbon dioxide gas and water and the neutralization of the glyphosate acid to form the herbicidal salt thereof and to dissolve the salt in the water.

19. A tablet, briquette, powder or granule having the composition of any of Claims 1-14.

20. A tablet of Claim 19, wherein said tablet is about 2 inches (5.08 centimeters) long by about 1/2 inch (1.27 centimeters) wide by about 1/2 inch (1.27 centimeters) thick.

## Patentansprüche

1. Im wesentlichen trockene, efferveszierende wasserlösliche, landwirtschaftlich annehmbare Zusammensetzung, welche eine herbizid wirksame Menge von im wesentlichen nicht-umgesetztem N-Phosphonomethylglycin und einen Säureakzeptor auf Carbonat-Basis in einem derartigen Ausmaß umfaßt, daß das N-Phosphonomethylglycin neutralisiert wird, wenn die Zusammensetzung in Wasser gegossen wird.

2. Zusammensetzung nach Anspruch 1, welche ferner einen festen oder flüssigen grenzflächenaktiven Stoff in einer Menge von 0,2 bis 15,0 Masse-% umfaßt.

3. Zusammensetzung nach Anspruch 2, wobei die trockene Zusammensetzung ein wasserlösliches Pulver, ein wasserlösliches Granulat, eine wasserlösliche Tablette oder ein wasserlösliches Brikett ist.

4. Zusammensetzung nach Anspruch 1, wobei die Wassermenge in der trockenen Zusammensetzung im Bereich von 0,01 bis 10,0 Masse-% der gesamten Zusammensetzung liegt.

5. Zusammensetzung nach Anspruch 4, wobei die Wassermenge in der trockenen Zusammensetzung im Bereich von 0,2 bis 2,0 Masse-% der gesamten Zusammensetzung liegt, und die Zusammensetzung in granulärer Form vorliegt.

6. Zusammensetzung nach Anspruch 1, worin der Säureakzeptor ausgewählt ist aus der Gruppe bestehend aus Ammonium- und Alkalimetall- und Erdalkalimetallcarbonaten, -bicarbonaten, bevorzugter Natriumcarbonat, Kaliumcarbonat, Natriumbicarbonat, Kaliumbicarbonat und Mischungen hievon.

7. Zusammensetzung nach Anspruch 1, welche ferner ein Co-Herbizid umfaßt, das ein wasserlösliches Salz bildet.

8. Zusammensetzung nach Anspruch 1 oder 7, welche ferner ein Dispergiermittel oder einen Korrosionsinhibitor umfaßt.

9. Zusammensetzung nach Anspruch 1 oder 7, welche ferner ein Verdickungsmittel umfaßt.

10. Zusammensetzung nach Anspruch 1 oder 7, welche ferner einen Calcium-Fänger und/oder einen Entschäumer umfaßt.

11. Zusammensetzung nach Anspruch 1 oder 7, welche ferner ein landwirtschaftlich annehmbares Ammoniumsalz oder einen anderen Synergisten umfaßt.

12. Zusammensetzung nach Anspruch 1 oder 7, welche ferner ein rasch verbrennendes Additiv umfaßt.

13. Zusammensetzung nach Anspruch 1 oder 7, welche ferner einen Anfeuchter umfaßt.

14. Zusammensetzung nach Anspruch 1 oder 7, welche ferner einen Farbstoff oder ein Pigment umfaßt.

15. Zusammensetzung nach Anspruch 2, worin der grenzflächenaktive Stoff ist: ein nicht-ionischer grenzflächenaktiver Stoff, ausgewählt aus Polyoxyethylen-Polyoxypropylen-Blockcopolymeren, Alkylphenolpolyoxyethylenethern, Polyoxyethylenoleylethern oder Mischung hievon, oder ein anionischer grenzflächenaktiver Stoff, ausgewählt aus Natriumlaurylsulfat, Natrium-α-olefinsulfonaten, Kalium-α-olefinsulfonaten, Natriumalkansulfonaten, Kaliumalkansulfonaten, Ammoniumalkansulfonaten, Isopropylammoniumalkansulfonaten, Natriumalkyl- oder -dialkylnaphthalinsulfonaten oder Mischungen hievon, oder ein kationischer grenzflächenaktiver Stoff, ausgewählt aus ethoxylierten Fettsäureaminen, Aminoxiden, wie Lauryldimethylaminoxid, N,N-Bishydroxyethylcocoaminoxid, propo xylierten quaternären Ammoniumverbindungen oder Mischungen hievon.

16. Verfahren zur Herstellung einer trockenen, wasserlöslichen landwirtschaftlich annehmbaren Zusammensetzung, welches das Mischen von Bestandteilen, von N-Phosphonomethylglycin, einem Säureakzeptor auf Carbonat-Basis, gegebenenfalls einem festen oder flüssigen grenzflächenaktiven Stoff, und danach das Mischen der gemischten Bestandteile zur Bildung der Zusammensetzung oder das Kompaktieren oder Tablettieren der Zusammensetzung zur Bildung eines Granulats umfaßt.

17. Verfahren zum Abtöten oder Bekämpfen von Unkräutern unter Verwendung einer Zusammensetzung nach einem der Ansprüche 1 bis 14 durch das Aufbringen einer herbizid wirksamen Menge an Glyphosat auf den Pflanzenort oder abzutötendes oder zu bekämpfendes Unkraut.

18. Verfahren zur Aktivierung der Herbizid-Effizienz von Glyphosatsäure durch das Inberührungbringen eines trockenen geformten Objekts, das im wesentlichen aus Glyphosatsäure, gegebenenfalls einem grenzflächenaktiven Stoff und einem Säureakzeptor auf Carbonat-Basis besteht, mit Wasser, um rasch und efferveszierend die Glyphosatsäure in eine wasserlösliche ionische Form überzuführen, durch die Bildung von Kohlendioxidgas und Wasser, und die Neutralisierung der Glyphosatsäure, um das Herbizid-Salz hievon zu bilden, und das Salz im Wasser zu lösen.

19. Tablette, Brikett, Pulver oder Granulat mit der Zusammensetzung nach einem der Ansprüche 1 bis 14.

20. Tablette nach Anspruch 19, wobei die Tablette etwa 5,08 cm (2 Zoll) lang, etwa 1,27 cm (1/2 Zoll) breit und etwa 1,27 cm (1/2 Zoll) dick ist.

## Revendications

1. Composition essentiellement sèche, effervescente soluble dans l'eau, acceptable sur le plan agricole, comprenant une quantité efficace du point de vue herbicide d'une N-phosphonométhylglycine essentiellement non-réagie, et un accepteur d'acide à base de carbonate dans une proportion telle qu'il puisse neutraliser la N-phosphonométhylglycine lorsque la composition est versée dans l'eau.

2. Composition selon la revendication 1, qui comprend en outre un tensioactif solide ou liquide dans une quantité de 0,2 à 15,0 % en poids.

3. Composition selon la revendication 2, dans laquelle ladite composition sèche est une poudre soluble dans l'eau, un granule soluble dans l'eau, une tablette soluble dans l'eau ou une briquette soluble dans l'eau.

4. Composition selon la revendication 1, dans laquelle la quantité d'eau dans ladite composition sèche est dans la gamme de 0,01 à 10,0 % en poids de la composition totale.

5. Composition selon la revendication 4, dans laquelle ladite quantité d'eau dans ladite composition sèche est dans la gamme de 0,2 à 2,0 % en poids de la composition totale et ladite composition est sous une forme granulaire.

6. Composition selon la revendication 1, dans laquelle ledit accepteur d'acide est choisi dans le groupe constitué par les carbonates d'ammonium et de métal alcalin et de métal alcalino-terreux, les bicarbonates, plus préférentiellement le carbonate de sodium, le carbonate de potassium, le bicarbonate de sodium, le bicarbonate de potassium et les mélanges de ceux-ci.

7. Composition selon la revendication 1, qui comprend en outre un co-herbicide qui forme un sel soluble dans l'eau.

8. Composition selon la revendication 1 ou la revendication 7, qui comprend en outre un agent dispersant ou un agent inhibiteur de corrosion.

9. Composition selon la revendication 1 ou la revendication 7, qui comprend en outre un épaississant.

10. Composition selon la revendication 1 ou la revendication 7, qui comprend en outre un séquestrant de calcium et/ou un agent désémulsifiant.

11. Composition selon la revendication 1 ou la revendication 7, qui comprend en outre un sel d'ammonium ou un autre agent augmentant la synergie acceptable sur le plan agricole.

12. Composition selon la revendication 1 ou la revendication 7, qui comprend en outre un additif exhibant une activité de dépérissement rapide.

13. Composition selon la revendication 1 ou la revendication 7, qui comprend en outre un humectant.

14. Composition selon la revendication 1 ou la revendication 7, qui comprend en outre un colorant ou un pigment.

15. Composition selon la revendication 2, dans laquelle ledit tensioactif est un tensioactif non-ionique choisi parmi les copolymères séquencés de polyoxyéthylène et de polyoxypropylène, les alkyl phénol polyoxyéthylène éthers, les polyoxyéthylène oléyléthers, ou les mélanges de ceux-ci, ou un tensioactif anionique choisi parmi le laurylsulfate de sodium, les alpha-oléfine sulfonates de sodium, les alpha-oléfine sulfonates de potassium, les alcane sulfonates de sodium, les alcane sulfonates de potassium, les alcane sulfonates d'ammonium, les alcane sulfonates d'isopropylammonium, les alkyle ou dialkyle naphtalène sulfonates de sodium ou les mélanges de ceux-ci, ou un tensioactif cationique choisi parmi les amines d'acide gras éthoxylées, les oxydes d'amine tels que l'oxyde de lauryldiméthylamine, l'oxyde de N,N-bishydroxyéthylcocoamine, les composés d'ammonium quaternaire propoxylés, ou les mélanges de ceux-ci.

16. Procédé pour la préparation d'une composition sèche, soluble dans l'eau, acceptable sur le plan agricole, qui comprend le fait de mettre ensemble les ingrédients N-phosphonométhylglycine, accepteur d'acide à base de carbonate, éventuellement un tensioactif solide ou liquide, et ensuite de mélanger les ingrédients mis ensemble pour former ladite composition ou de mettre sous forme compacte ou en tablette ladite composition pour former un granule.

17. Procédé de destruction ou de contrôle des mauvaises herbes utilisant la composition des revendications 1 à 14 en appliquant une quantité efficace du point de vue herbicide du glyphosate à l'endroit où se situe la plante ou la mauvaise herbe qui doit être détruite ou contrôlée.

18. Procédé pour activer l'efficacité herbicide du glyphosate acide en mettant en contact un objet sec mis en forme constitué essentiellement du glyphosate sous sa forme acide, éventuellement d'un tensioactif et d'un accepteur d'acide à base de carbonate, avec de l'eau pour transformer rapidement par effervescence le glyphosate acide en une forme ionique soluble dans l'eau par la formation de dioxyde de carbone gazeux et d'eau et la neutralisation de l'acide de glyphosate pour former le sel herbicide de celui-ci et pour dissoudre le sel dans l'eau.

19. Tablette, briquette, poudre ou granule ayant la composition selon l'une quelconque des revendications 1 à 14.

20. Tablette selon la revendication 19, où la tablette a environ 2 pouces (5,08 centimètres) de longueur par environ 1/2 pouce (1,27 centimètres) de largeur par environ 1/2 pouce (1,27 centimètre) d'épaisseur.
